# EUROPÄISCHE PATENTSCHRIFT

(11) **EP 2 385 282 B1**
(45) Veröffentlichungstag und Bekanntmachung des Hinweises auf die Patenterteilung: **14.11.2012**
(21) Anmeldenummer: 11003302.4
(22) Anmeldetag: 20.04.2011
(51) Int. Cl.: F16K 15/20, F16K 27/02

(54) **Ventilanordnung mit einem Basisteil und einem Einsatzteil**
Valve assembly with a base section and an insert
Agencement de soupape doté d'un élément de base et d'un élément d'insertion

(30) Priorität: 07.05.2010 DE 102010020068
(43) Veröffentlichungstag der Anmeldung: 09.11.2011
(73) Patentinhaber: Otto Bock Healthcare GmbH, 37115 Duderstadt (DE)
(72) Erfinder: Mosler, Lüder, 37115 Duderstadt (DE); Hillmann, Martin, 37115 Duderstadt (DE)
(74) Vertreter: Lins, Edgar

(56) Entgegenhaltungen:
- EP-A2- 0 803 225
- WO-A2-2007/001745

## Beschreibung

Die Erfindung betrifft eine Ventilanordnung mit
- einem Basisteil, das Befestigungsmittel zur Befestigung der Ventilanordnung an einem Einsatzort sowie eine in einer Axialrichtung durchgehende Bohrung mit einer Innenwandung aufweist,
- einem Ventileinsatzteil, das mit einem Stutzen in die Bohrung mit einer Dichtung abgedichtet gegenüber der Innenwandung einsetzbar ist und wenigstens ein Verriegelungselement aufweist, mit dem das Ventileinsatzteil in der eingesetzten und abgedichteten Position durch elastisches Überfahren eines Rastvorsprungs im Basisteil verriegelbar ist und an dem sich ein Betätigungselement zum Lösen und Entfernen des Ventileinsatzteils von dem Basisteil befindet, und
- einem verstellbaren Ventilelement, das in einer einen Ventilsitz aufweisenden Kammer des Ventileinsatzteils gelagert und mit dem eine Fluidverbindung durch die Ventilanordnung hindurch herstellbar oder absperrbar ist.

Derartige Ventilanordnungen können in zahlreichen Anwendungsfällen zum Einsatz kommen. Durch den Aufbau mit einem Basisteil und einem Ventileinsatzteil ist es möglich, das Ventileinsatzteil mit seinem Ventilelement auf seine Funktion hin zu überprüfen und ggf. zu reinigen, während das Basisteil zur Halterung des leicht entnehmbaren Ventileinsatzteil dient und am Einsatzort mit dem Befestigungsmitteln befestigt bleibt. Diese Befestigung kann durch Kleben, Verschweißen oder Einformen unlösbar und beispielsweise mittels einer Schraubbefestigung lösbar ausgebildet sein. Das Ventilelement kann dabei die Funktion eines Sicherheitsventils, beispielsweise Überdruckventils, erfüllen und ist vorzugsweise manuell betätigbar, um beispielsweise einen Druckausgleich manuell zu steuern. Somit sind derartige Ventilanordnung an allen Überdruck- und Unterdruckbehältern, beispielsweise auch an einem Druckkochtopf einsetzbar.

Ein bevorzugter Einsatz einer erfindungsgemäßen Ventilanordnung ist für Prothesenschäfte vorgesehen, die der Aufnahme von Amputationsstümpfen dienen, um eine das amputierte Glied ersetzende Prothese an dem Amputationsstumpf zu befestigen. Für diesen Einsatzfall kann es sinnvoll sein, zwischen dem Prothesenschaft und dem Amputationsstumpf einen Unterdruck auszubilden, um die Verbindung zwischen dem Amputationsstumpf und dem Prothesenschaft zu verbessern. In diesem Fall ist die Ventilanordnung üblicherweise in einen distalen Abschnitt des Prothesenschafts eingesetzt und erfüllt die Funktion, den Unterdruckraum innerhalb des Prothesenschafts abzuschließen und eine Belüftung des Unterdruckraums durch eine Betätigung von außen zu ermöglichen, sodass der Prothesenschaft von dem Amputationsstumpf ohne einen störenden Unterdruck abgezogen werden kann, wenn die Prothese abgenommen werden soll. Das vom Basisteil abnehmbare Ventileinsatzteil ist in diesem Fall für den Nutzer besonders vorteilhaft, wenn beispielsweise zum Einführen des Amputationsstumpfes in den Prothesenschaft eine Textilsocke verwendet wird, die zur Verminderung der Gleitreibung zwischen Amputationsstumpf und Prothesenschaft über den Amputationsstumpf gezogen wird. Ein freies Ende der Socke wird dann durch die durchgehende Bohrung des Basisteils geschoben, wenn das Ventileinsatzteil vom Basisteil abgenommen worden ist. Nach dem Einführen des Amputationsstumpfes in den Prothesenschaft mit Hilfe der Socke kann dann die Socke an dem durch die Bohrung des Basisteils geschobenen Ende vom Amputationsstumpf abgezogen und aus dem Innenraum des Prothesenschafts entfernt, sodass nunmehr die erhöhte und gewünschte Haftreibung zwischen dem Amputationsstumpf und der Innenwand des Prothesenschafts zur Verfügung steht. Dabei ist es unerheblich, ob der Amputationsstumpf unmittelbar in den Prothesenschaft oder abgedeckt durch einen sich an den Amputationsstumpf anpassenden und eine Polsterwirkung ausübenden Liner in den Prothesenschaft eingeführt wird. Nach dem Einsetzen des Ventileinsatzteils kann dann über die Ventilanordnung in dem Innenraum des Prothesenschafts ein Unterdruck erzeugt werden. Hierfür ist das Ventilelement zweckmäßigerweise als Rückschlagventil ausgebildet, das einen Fluidfluss nur in eine Richtung durchlässt, zum Evakuieren des Innenraums des Prothesenschafts also Luft nur aus dem Innenraum des Prothesenschafts durch die Wandung des Prothesenschafts hindurch zum Außenraum des Prothesenschafts durchtreten lässt. Wenn die Prothese wieder abgenommen werden soll, kann durch einen Druck auf das Ventilelement eine Belüftung des Innenraums des Prothesenschafts stattfinden, sodass ein Druckausgleich möglich ist, der das Abnehmen der Prothese erlaubt.

Das Einsetzen des Ventileinsatzteils in das Basisteil ist üblicherweise durch Verschraubung erfolgt. Das Ventileinsatzteil ist mit einem Außengewinde in ein Innengewinde der Bohrung des Basisteils eingeschraubt worden. Dies hat sich als schwierig bedienbar herausgestellt, weil für eine erforderliche gute Abdichtung zwischen dem Basisteil und dem Ventileinsatzteil nur eine geringe Gewindesteigung vorgesehen werden darf, die aber ein genaues Einschrauben des Ventileinsatzteils in das Basisteil erfordert. Dieses genaue Einschrauben ist Patienten, die diese Einschraubbewegung unter einem erschwerten oder gar keinem Sichtkontakt ausführen sollen, nicht mit Sicherheit möglich ist. Daher ist dieses Einschrauben manchmal gar nicht, manchmal nur nach großen Mühen oder unter Zuhilfenahme einer dritten Person gelungen.

In WO 2007/001745 A2 ist eine gewindelose Ventilanordnung offenbart, bei der das Ventileinsatzteil in dem Basisteil mit Hilfe von Verriegelungselementen einsetzbar ist. Das Ventileinsatzteil weist dabei einen kreiszylindrischen Stutzen auf, der einen O-Ring als Dichtung trägt. Dieser ist passig in die kreiszylindrische Bohrung des Basisteils einsetzbar. Das Ventileinsatzteil weist an einem dem Stutzen abgewandten Flanschende als zweiarmige Hebel ausgebildete Verriegelungsarme auf, die an ihren zum Stutzen hin zeigenden Ende eine Verriegelungsrippe aufweisen, die hinter einen Rastvorsprung des Basisteils von radial außen greifen können. Die Bewegung der Verriegelungsarme in die verriegelnde Stellung wird durch eine auf eine Verriegelungsachse aufgeschobene Spiralfeder unterstützt. Am von der Rastrippe abgewandten Ende der Verriegelungsarme befinden sich Betätigungsvorsprünge, die mit Fingern hintergriffen werden können, um die oberen Enden der Verriegelungsarme nach radial innen - und damit die Rastrippen nach radial außen - zu drücken und die Verriegelungsverbindung zwischen Ventileinsatzteil und Basisteil zu lösen, sodass das Ventileinsatzteil aus dem Basisteil herausgezogen werden kann.

Die bekannte Ventilanordnung erlaubt eine erhebliche erleichterte Betätigung der Ventilanordnung zum Entfernen und zum anschließenden Einsetzen des Ventileinsatzteils in das Basisteil. Das Ventileinsatzteil ist dabei durch die erforderliche Montage der als Metallstift ausgebildeten Drehachse der Verriegelungsarme, auf die die Spiralfeder, die als Drehfeder fungieren soll, aufgeschoben und in einer korrekt gespannten Stellung der Spiralenden relativ zum Gehäuse des Ventileinsatzteils einerseits und zum Betätigungsarm andererseits positioniert sein muss, aufwändig zu montieren.

Der vorliegenden Erfindung liegt daher die Aufgabe zugrunde eine Ventilanordnung der eingangs erwähnten Art so auszubilden, dass sie die erreichten Bedienvorteile gewährleistet, jedoch in der Herstellung weniger aufwändig ist.

Diese Aufgabe wird erfindungsgemäß bei einer Ventilanordnung der eingangs erwähnten Art dadurch gelöst, dass an den Stutzen des Ventileinsatzteils oberhalb der Dichtung mit der Innenwandung des Basisteils das wenigstens eine Verriegelungselement radial außerhalb der Kammer einstückig angeformt ist, das einen elastisch federnden Schenkel mit jeweils einem freien Ende ausbildet und wenigstens eine nach radial außen zeigende Rastrippe zum Zusammenwirken mit dem nach radial innen gerichteten, an der Innenwand ausgebildeten Rastvorsprung aufweist und dass sich das Betätigungselement an dem freien Ende des federnden Schenkels zum Drücken nach radial innen befindet.

Der erfindungsgemäße Ventileinsatz, der das Ventilelement trägt, ist einstückig mit den elastisch federnden Schenkel ausgebildet und kann somit in die durchgehende Bohrung des Basisteils eingeschoben werden. Da der federnde Schenkel eine nach radial außen gerichtete Rastrippe aufweist, kann dieser mit dem Rastvorsprung des Basisteils zusammenwirken, der erfindungsgemäß nach radial innen gerichtet an der Innenwandung ausgebildet ist. Für das erfindungsgemäße Ventileinsatzteil ist es daher nicht mehr erforderlich, Betätigungsarme mit einer Drehachse an einem Flansch schwenkbar zu befestigen, da die Verriegelung erfindungsgemäß durch eine federnde Rastung bereits beim Einschieben des Ventileinsatzteils in das Basisteil erfolgt. Das Betätigungselement zum Lösen der Verriegelung durch den zugehörigen Schenkelbefindet sich an dem freien Ende des federnden Schenkels. Durch ein Drücken nach radial innen an dem Betätigungselement kann die nach radial außen gerichtete Rastrippe von dem nach radial innen gerichteten Rastvorsprung an der Innenwandung der Bohrung gelöst werden, sodass der Ventileinsatz entnehmbar ist. Bevorzugt ist das Betätigungselement einstückig mit dem federnden Schenkel ausgebildet.

In einer besonders einfachen Ausführungsform der Erfindung sind zwei Verriegelungselemente vorgesehen, die durch jeweils einen zum freien Ende hin offenen und zum Stutzen hin geschlossenen Schlitz radial federnd beweglich sind. Die beiden Schlitze befinden sich somit zwischen einer Wandung der Kammer und den federnden Schenkeln die an den Stutzen angesetzt sind, der in Verlängerung der Kammer ausgebildet ist.

Da die Rastrippe des Verriegelungselements beim Einschieben hinter dem Rastvorsprung an der Inenwandung einschnappen soll, ist es zweckmäßig, wenn die Rastrippe sägezahnförmig ausgebildet ist, sodass sie sich beim Einschieben leicht über den Rastvorsprung an der Innenwandung des Basisteils schieben lässt, ein Herausziehen in die entgegengesetzte Richtung jedoch aufgrund der eine stufenförmige Kante ausbildenden Sägezahnform nicht möglich ist.

Der Rastvorsprung ist zweckmäßigerweise an der Innenwandung der Bohrung des Basisteils als ein geschlossener Ring vorgesehen, der zweckmäßigerweise eine stufenförmige Kante zum Zusammenwirken mit der stufenförmigen Kante der Rastrippen ausformt. Dieser Rastvorsprung begrenzt in einer vorteilhaften Ausführungsform eine ringförmig umlaufende Nut mit einem in Axialrichtung sägezahnförmigen, sich zum Rastvorsprung hin vertiefenden. Profil. Die Nut ist somit komplementär zur Sägezahnform der Rastrippe geformt.

Das Einführen des Ventileinsatzes in die durchgehende Bohrung des Basisteils wird für den Patienten in entscheidender Weise dadurch erleichtert, dass sich ein Abschnitt des Stutzens des Ventileinsatzteils mit einem kreisförmigen Querschnitt konisch verjüngt und das die Innenwandung des Basisteils entsprechend konisch ausgebildet ist. Dadurch erweitert sich die Bohrung trichterförmig zu der Seite, auf der das Ventileinsatzteil in das Basisteil eingeführt wird. Insbesondere bei Prothesenträgern kann durch die Handhabung der erfindungsgemäßen Ventilanordnung erheblich erleichtert werden. Die Dichtung ist dabei vorzugsweise im konischen Abschnitt des Stutzens und der Innenwandung angeordnet.

Bei der erfindungsgemäßen Ventilanordnung ist das verstellbare Ventilelement vorzugsweise dadurch betätigbar, dass von der Außenseite, auf der der Ventileinsatz in das Basisteil eingeführt wird, in Richtung des Stutzens des Ventileinsatzteils eingedrückt wird, um einen Druckausgleich manuell herbeizuführen. Eine versehentliche Betätigung des Ventilelements wird bei der erfindungsgemäßen Ventilanordnung in einer bevorzugten Ausführungsform dadurch vermieden, dass eine Abdeckkappe zum Übergreifen der Betätigungselemente von radial außen und zur Abdeckung des Ventilelements ausgebildet ist. Die Abdeckkappe deckt das Ventilelement ab und verhindert eine versehentliche Betätigung, wodurch beispielsweise die Befestigung der Prothese am Amputationsstumpf gelöst werden würde. Für die Befestigung der Abdeckkappe auf der Ventilanordnung sind keine zusätzlichen Rastmittel o. dgl. erforderlich, weil die Abdeckkappe vorzugsweise die Betätigungselemente übergreift, die federnd gegeneinander, also nach radial innen, an den elastisch federnden Schenkeln angebracht sind, sodass die Abdeckkappe auf die Betätigungselemente bei Bedarf leicht aufgerastet werden kann, wofür nur eine geringe Verschiebung der Betätigungselemente nach radial innen ausreicht. Diese geringe Verschiebung für das Aufrasten der Abdeckkappe genügt jedoch nicht, um das Ventileinsatzteil aus dem Basisteil herauszulösen.

In einer bevorzugten Ausführungsform der Erfindung ist die Abdeckkappe mit den Befestigungsmitteln des Basisteils unverlierbar an dem Basisteil befestigt. Die Befestigungsmittel für das Basisteil am Einsatzort werden somit zugleich dazu benutzt, auch die Abdeckkappe unverlierbar am Basisteil anzubringen. Dies gelingt bevorzugt mit einem Befestigungsring, der mittels einer Aufschraubmutter auf einem Gewindeabschnitt des Basisteils am Basisteil unverlierbar gehalten wird und einstückig mit einem tangentialen Verbindungsabschnitt zur einstückig angeformten Abdeckkappe führt. Dabei kann das tangentiale Verbindungsstück geradlinig oder auch spiralförmig vom Befestigungsring zur Abdeckkappe führen. So kann auch die unverlierbar anbringbare Abdeckkappe als ein einziges Kunststoff-Spritzteil hergestellt werden und braucht somit nicht aus mehreren Teilen zusammengesetzt werden.

Die Erfindung soll im Folgenden anhand eines in der Zeichnung dargestellten Ausführungsbeispiels näher erläutert werden. Es zeigen:
- Figur 1: eine explodierte Darstellung einer Ausführungsform einer erfindungsgemäßen Ventilanordnung;
- Figur 2: einen Schnitt durch ein Basisteil;
- Figur 3: eine vergrößerte Darstellung eines Details aus Figur 2;
- Figur 4: zwei Ansichten und zwei senkrecht zueinander stehende Schnittdarstellungen eines einstückig hergestellten Ventileinsatzteils;
- Figur 5: eine Ansicht und einen Teilschnitt durch eine Abdeckkappe mit einem Befestigungsring zum unverlierbaren Anbringen an dem Basisteil;
- Figur 6: einen Schnitt durch eine komplett montierte Ventilanordnung mit Abdeckkappe.

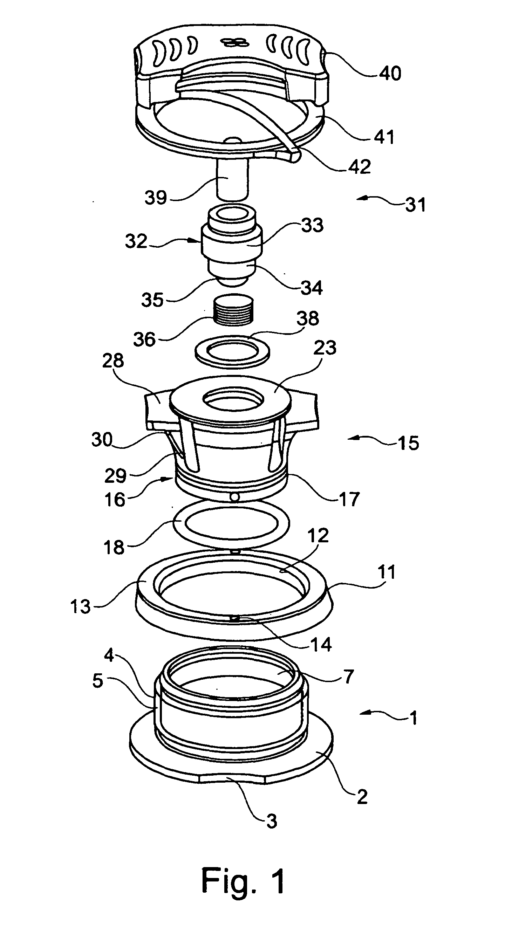

Wie Figur 1 erkennen lässt, weist die erfindungsgemäße Ventilanordnung ein Basisteil 1 auf, die an einem Ende einen ringförmig erweiterten Flansch 2 trägt, an dessen Außenumfang zwei geradlinige Schlüsselflächen 3 ausgebildet sind. An den Flansch 2 schließt sich ein hohlzylindrischer Abschnitt 4 an, der an seiner äußeren Umfangsfläche mit einem Außengewinde 5 versehen ist. Der hohlzylindrische Abschnitt 4 enthält eine durchgehende Bohrung 6, die von einer Innenwandung 7 begrenzt ist.

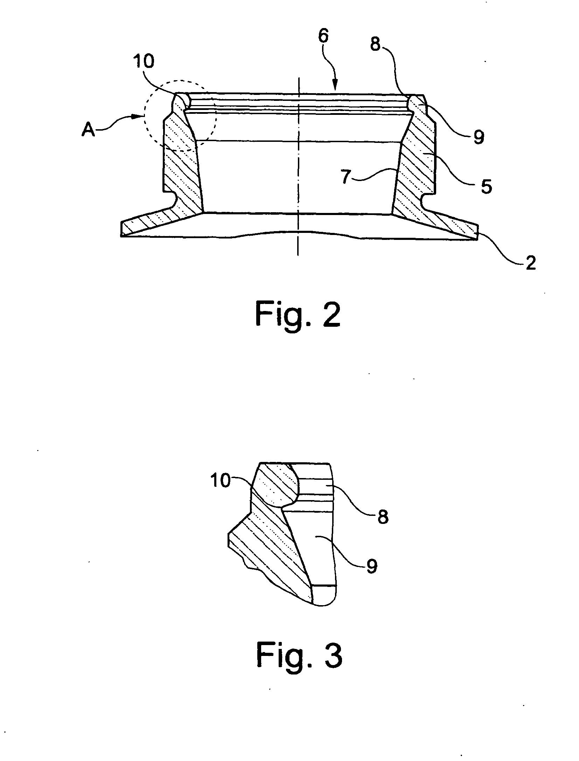

Die Figuren 2 und 3 lassen erkennen, dass die Innenwandung 7 vom Flansch 2 ausgehend sich konisch erweitert und am vom Flansch 2 entfernten Ende einen ringförmigen Rastvorsprung 8 aufweist, der eine sägezahnförmige Nut 9 begrenzt. Die sägezahnförmige Nut 9 bildet mit dem Rastvorsprung 8 eine stufenförmige Rastkante 20 auf, wie insbesondere Figur 3 verdeutlicht.

Mit dem Außengewinde 5 des Basisteils 1 wirkt eine Ringmutter 11 (Figur 1) zusammen, die kreisförmig mit einem Innengewinde 12 ausgebildet ist. Das Innengewinde 12 ist auf das Außengewinde 5 des Basisteils aufschraubbar, sodass das Basisteil 1 in eine geeignete Öffnung einer Wandung einsetzbar ist, wo das Basisteil 1 auf der einen Seite der Wandung mit dem Flansch 2 und auf der anderen Seite der Wandung mit der Ringmutter 11 anliegt, wenn die entsprechende Durchgangsöffnung der Wandung dem Außendurchmesser des hohlzylindrischen Abschnitts 4 entspricht. Durch das Anziehen der Ringmutter 11 kann eine reibschlüssige Festlegung des Basisteils 1 an einer derartigen Wandung erfolgen. Die Wandung kann beispielsweise in einem bevorzugten Ausführungsbeispiel die Wand eines Prothesenschafts sein.

Die Ringmutter 11 weist auf ihrer stirnseitigen Ringfläche 13 zwei diametral gegenüberliegende Sacklöcher 14 auf, in die entsprechende Stifte eines Werkzeugs zum Festziehen der Ringmutter 11 eingreifen können.

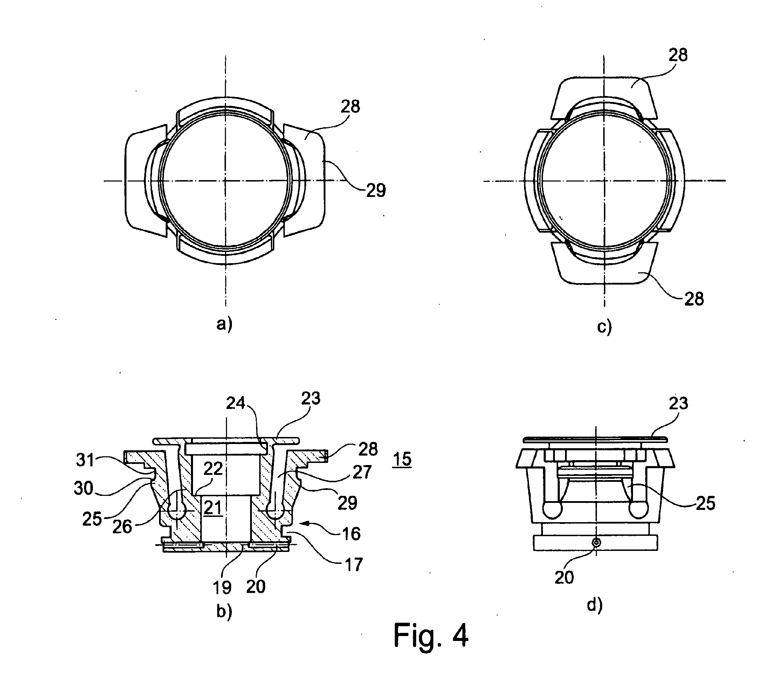

In die Bohrung 6 des Basisteils 1 ist ein Ventileinsatzteil 15 einsetzbar. Das in Figur 4 in zwei Ansichten von oben, einem Vertikalschnitt und einer Seitenansicht dargestellte Ventileinsatzteil 15 ist ein einstückig ausgebildetes Spritzgussteil. Es bildet an einem unteren Ende einen Stutzen 16 aus, der nach unten leicht konisch verjüngt ist, wobei die Konizität des Stutzens 16 der Konizität der Innenwandung 7 des Basisteils 1 entspricht. Im Außenumfang des Stutzens 16 befindet sich eine Ringnut 17, in die ein O-Ring 18 (Figur 1) einlegbar ist. Der Stutzen 16 ist durch eine Bodenplatte 19 abgeschlossen, in die radial, einander diametral gegenüberliegende Luftkanäle 20 eingearbeitet sind. Die Luftkanäle 20 verbinden eine Kammer 21 im Innern des Ventileinsatzteils 15 mit der Umgebung. Die Kammer erstreckt sich mit einer stufenförmigen Erweiterung zu einer oberen, ringförmigen Abschlusswand 23. Unterhalb der Abschlusswand 23 ist in der Innenwandung der Kammer 21 eine Ringnut 24 eingearbeitet.

Die Kammer 21 ist in dem Ventileinsatzteil 15 in Umfangsrichtung durch eine Wandung 25 begrenzt.

Von dem Stutzen 16 erstrecken sich zwei diametral gegenüberliegende federnde Schenkel 26 nach oben, die durch einen vertikalen, etwas schräg nach unten gerichteten Schlitz 27 von der Wandung 25 getrennt sind, sodass sich die federnden Schenkel 26 aufgrund ihrer Materialverbindung mit dem Material des Stutzens 16 am unteren Ende seitlich federnd aufeinander zu und voneinander weg bewegen können. Am oberen Ende der federnden Schenkel sind voneinander wegzeigende Betätigungselemente 28 ausgebildet, deren Kontur eine leicht nach innen gewölbte Fingermulde 29 ausbilden, wenn die federnden Schenkel 26 manuell nach innen in den Bereich der Schlitze 27 eingedrückt werden sollen.

Die federnden Schenkel 26 weisen an ihrer radial äußeren Seite jeweils eine Rastrippe 29 auf, die die Form eines Sägezahns aufweist und zu dem Betätigungselementen 28 mit einer stufenförmigen Rastkante 30 abgeschlossen ist an die sich eine ringförmige Nut 31 anschließt.

Die Sägezahnform der Rastrippe 29 ist an die sägezahnförmige Nuten 9 in der Innenwandung 7 des Basisteils angepasst. Die Nut 30 dient zur Aufnahme bzw. zum Übergreifen des Rastvorsprungs 8.

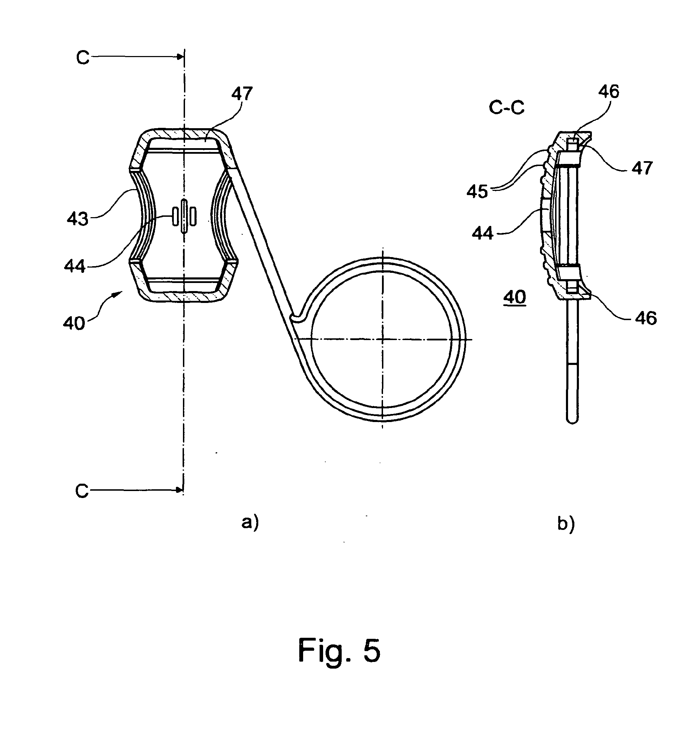

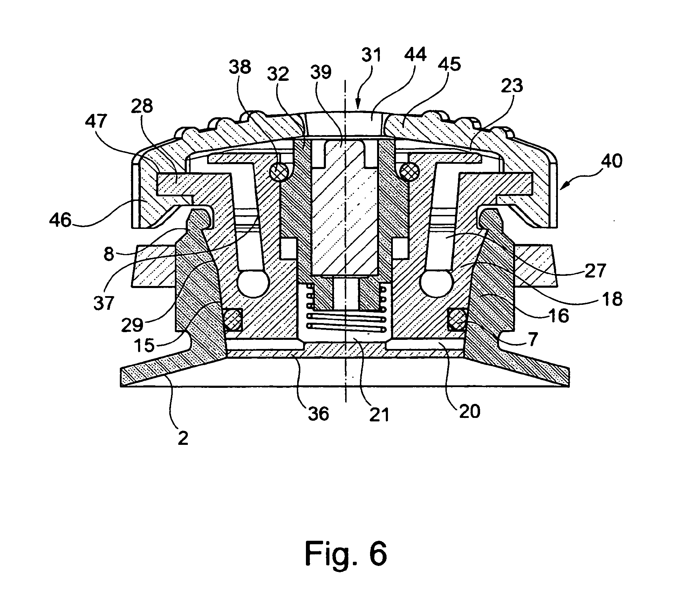

Die Kammer 21 des Ventileinsatzteils 15 dient der Aufnahme eines Ventilelements 31. Dieses weist einen zylindrischen Ventilkörper 32 auf, dessen Außendurchmesser die beiden abgestuften Durchmesser der Kammer 21 angepasst ist. Demgemäß weist der Ventilkörper einen mittleren Abschnitt 33 mit einem Außendurchmesser auf, der dem Durchmesser der stufenförmigen Erweiterung 22 der Kammer 21 entspricht. Daran schließt sich zur Bodenplatte 19 hin ein Abschnitt 34 mit einem kleineren Durchmesser an. Ein nochmal stufenförmig verkleinerter Abschnitt 35 dient zur Aufnahme einer Druckfeder 36, die sich auf der Bodenplatte 19 im Ventileinsatzteil abstützt und daher den Ventilkörper 32 mit einer in der Darstellung in der Figur 1 nach oben gerichteten Vorspannung drückt. An die andere Seite des mittleren Abschnitts 33 schließt sich eine kurvenförmig verjüngte Ventilsitzfläche 37 an die an einem in die Ringnut 24 des Ventileinsatzteils 15 eingelegten O-Ring 38 zur dichtenden Anlage kommt. In den innen hohl ausgebildeten zylindrischen Ventilkörper 32 ist noch ein Einsatzteil 39 angesetzt, an dem das Ventilelement 31 gegen die Kraft der Druckfeder 36 eindrückbar ist. Die Betätigungselemente 28 werden von einer Abdeckkappe 40 übergriffen, die eine entsprechende längliche Form aufweist. Sie ist einstückig mit einem Zwischenstück 41 und einem Befestigungsring 42 verbunden und wird als entsprechendes Spritzgussteil hergestellt, wie dies in Figur 5 verdeutlicht ist. Der Befestigungsring 42 wird auf der Seite der Ringmutter 11 auf den hohlzylindrischen Abschnitt 4 des Basisteils geschoben und bei der Befestigung des Basisteils 1 am Einsatzort durch das Anziehen der Ringmutter 12 am Basisteil unverlierbar befestigt. Das Zwischenstück 41 ist elastisch verformbar und ermöglicht somit eine Abnahme und ein Aufbringen der Abdeckkappe 40. Hierzu wird die Abdeckkappe 40 gegenüber der in Figur 1 dargestellten Befestigungsstellung um 90°gedreht, sodass die länglichen Enden der Abdeckkappe in eine die Betätigungselemente 28 nach unten überragende Stellung gelangen. Durch Drehung um 90° kann dann die Abdeckkappe 40 die Betätigungselemente einerseits nach oben abdecken und andererseits nach unten untergreifen, wie dies in Figur 6 verdeutlicht ist.

Die in Figur 5 dargestellte Abdeckkappe 40 ist mit einer Längsrichtung L länglich ausgebildet und weist auf den beiden Längsseiten eingeformte Griffmulden 43 auf. Mittig in der Längsachse L ist die Abdeckkappe 40 mit drei Lüftungsschlitzen 44 versehen. Bezüglich der Längsachse L beiderseits ist die Oberfläche der Abdeckkappe mit Griffrillen 45 ausgebildet, die die Handhabung der Abdeckkappe 40 erleichtern sollen. Bezüglich der Längsachse L befinden sich an beiden Enden der Abdeckkappe 40 von der Oberfläche abstehende Stirnwände 46, in die eine senkrecht zur Längsachse verlaufende Nut 47 eingearbeitet ist. Die Breite der Nut entspricht der Materialstärke der flächig ausgebildeten Betätigungselemente 28, die bei der Drehung der Abdeckkappe 40 in die Nuten 47 eingreift, wobei sie ggf. um ein geringes Maß gegeneinander gedrückt werden können.

Figur 6 verdeutlicht den Zusammenbau der Ventilanordnung gemäß Figur 1, wobei die Befestigung der Abdeckkappe mittels des Befestigungsrings 42 und des Zwischenstücks 41 aus Übersichtlichkeitsgründen nicht eingezeichnet ist.

Es ist erkennbar, dass das Ventileinsatzteil 15 im Bereich des konischen Stutzens 8 und der konischen Innenwandung 7 mit dem O-Ring 18 gegenüber dem Basisteil 1 abgedichtet ist.

Die Abdichtung des Ventilelements 31 gegenüber dem Ventileinsatzteil 15 erfolgt hingegen durch den O-Ring 38 mit der Ventilsitzfläche 37 des Ventilkörpers 32. Durch Drücken des Ventilelements 31 gegen die Rückstellkraft der Druckfeder 36 kann ein Druckausgleich durch die Luftkanäle 20 und die Kammer 21 des Ventileinsatzteils 15 durchgeführt werden.

Das Einsatzteil 39 bewirkt im Übrigen, dass bei der Abdichtung des Ventilkörpers 32 am O-Ring 38 ein Fluidfluss durch das Ventilelement 31 in Figur 6 nur von unten nach oben erfolgen kann. Ist die Ventilanordnung an einem Prothesenschaft so angebracht, dass der Flansch 2 des Basisteils 1 sich auf der Innenseiten der Wand des Prothesenschafts befindet, ist eine Luftströmung durch die Ventilanordnung somit für die Evakuierung des Innenraums des Prothesenschafts möglich.

Zur Entnahme des Ventileinsatzteils 15 mit dem Ventilelement 31 wird die Abdeckkappe 40 um 90° gedreht, sodass die Nuten 47 nicht mehr die Betätigungselemente 28 umfassen. Die Abdeckkappe 40 kann dann fallengelassen werden, da es durch den Befestigungsring an der Ventilanordnung hängen bleibt. Nun können die Betätigungselemente 28 radial nach innen gegeneinander gedrückt werden, wodurch die Rastrippen 29 von dem ringförmigen Rastvorsprung 8 loskommen, sodass das Ventileinsatzteil 15 aus der Bohrung 6 herausgezogen werden kann. Die Bohrung 6 steht dann als Öffnung für etwaige benötigte Handgriffe zur Verfügung.

Das Einsetzen des Ventileinsatzteils 15 in das Basisteil 1 erfolgt durch axiales Einschieben solange, bis die Rastrippe 29 mit ihrer Rastkante 30 hinter die Rastkante 10 des Rastvorsprungs 8 des Basisteils schnappt und sich die sägezahnförmige Rastrippe 29 an die entsprechend sägezahnförmige Nut 9 anlegt.

Abgesehen von dem Ventilelement 31 wird die Ventilanordnung durch vier einfache Spritzteile gebildet, nämlich durch das Basisteil 1, die Ringmutter 11, das Ventileinsatzteil 15 und die Abdeckkappe 40 mit dem Zwischenstück 41 und dem Befestigungsring 41.

Für die genannten Teile ist daher keine Montage erforderlich. Die Zusammenstellung der Ventilanordnung am Einsatzort ist außerordentlich einfach und beschränkt auf das Festziehen der Ringmutter 11 auf dem Außengewinde 5 des Basisteils 1.

## Patentansprüche

1. Ventilanordnung mit einem Basisteil (1), das Befestigungsmittel (11) zur Befestigung der Ventilanordnung an einem Einsatzort sowie eine in einer Axialrichtung durchgehende Bohrung (6) mit einer Innenwandung (7) aufweist,
einem Ventileinsatzteil (15), das mit einem Stutzen (16) in die Bohrung (6) mit einer Dichtung (18) abgedichtet gegenüber der Innenwandung (6) einsetzbar ist und wenigstens ein Verriegelungselement (29) aufweist, mit dem das Ventileinsatzteil (15) in der eingesetzten und abgedichteten Position durch elastisches Überfahren eines Rastvorsprungs (8) im Basisteil (1) verriegelbar ist und an dem sich ein Betätigungselement (28) zum Lösen und Entfernen des Ventileinsatzteils (15) von dem Basisteil (1) befindet, und einem verstellbaren Ventilelement (31), das in einer einen Ventilsitz (24, 38) aufweisenden Kammer (21) des Ventileinsatzteils (15) gelagert und mit dem eine Fluidverbindung durch die Ventilanordnung hindurch herstellbar oder absperrbar ist, **dadurch gekennzeichnet, dass** an den Stutzen (16) des Ventileinsatzteils (15) oberhalb der Dichtung (18) mit der Innenwandung (7) des Basisteils (1) das wenigstens eine Verriegelungselement (26, 29) radial außerhalb der Kammer (21) einstückig angeformt ist, das einen elastisch federnden Schenkel (26) ausbildet und wenigstens eine nach radial außen gerichtete Rastrippe (29) zum Zusammenwirken mit dem nach radial innen gerichteten, an der Innenwandung (7) ausgebildeten Rastvorsprung (8) aufweist und dass sich das Betätigungselement (28) an den freien Enden des federnden Schenkels (26) zum Drücken nach radial innen befindet.

2. Ventilanordnung nach Anspruch 1, **dadurch gekennzeichnet, dass** zwei Verriegelungselemente (26, 29) vorgesehen sind, die durch jeweils einen zum freien Ende hin offenen und zum Stutzen (16) hin geschlossenen Schlitz (27) radial federnd beweglich sind.

3. Ventilanordnung nach Anspruch 1 oder 2, **dadurch gekennzeichnet, dass** die Rastrippe (29) des Verriegelungselements (26, 29) sägezahnförmig ausgebildet sind.

4. Ventilanordnung nach einem der Ansprüche 1 bis 3, **dadurch gekennzeichnet, dass** der Rastvorsprung (8) der Innenwandung (7) einen geschlossenen Ring bildet.

5. Ventilanordnung nach Anspruch 4, **dadurch gekennzeichnet, dass** der Rastvorsprung (8) eine ringförmig umlaufende Nut (9) mit einem in der Axialrichtung sägezahnförmig, sich zum Rastvorsprung (8) hin vertiefenden Profil begrenzt.

6. Ventilanordnung nach einem der Ansprüche 1 bis 5, **dadurch gekennzeichnet, dass** sich ein Abschnitt des Stutzens (16) des Ventileinsatzteils (15) mit einem kreisförmigen Querschnitt konisch verjüngt und dass die Innenwandung (7) des Basisteils (1) entsprechend konisch ausgebildet ist.

7. Ventilanordnung nach Anspruch 6, **dadurch gekennzeichnet, dass** die Dichtung (18) im konischen Abschnitt des Stutzens (16) und der Innenwandung (7) angeordnet ist.

8. Ventilanordnung nach einem der Ansprüche 1 bis 7, **dadurch gekennzeichnet, dass** eine Abdeckkappe (40) zum Übergreifen des Betätigungselements (28) von radial außen und zur Abdeckung des Ventilelements (31) ausgebildet ist.

9. Ventilanordnung nach Anspruch 8, **dadurch gekennzeichnet, dass** die Abdeckkappe (40) mit dem Befestigungsmitteln (11) des Basisteils (1) unverlierbar an dem Basisteil (1) befestigt ist.

10. Ventilanordnung nach einem der Ansprüche 1 bis 9, **dadurch gekennzeichnet, dass** das Betätigungselement (28) einstückig mit dem federnden Schenkel (26) ausgebildet ist.

## Claims

1. A valve arrangement
with a base part (1), which has securing means (11) for securing the valve arrangement to a place of use and has an axially continuous bore (6) with an inner wall (7),
with a valve insert part (15), which can be inserted with a stub (16) into the bore (6), sealed by a seal (18) with respect to the inner wall (6), and has at least one latching element (29) with which the valve insert part (15) can be latched in the inserted and sealed position, by elastic engagement over a locking projection (8) in the base part (1), and on which an actuating element (28) is located for releasing and removing the valve insert part (15) from the base part (1), and with an adjustable valve element (31), which is mounted in a chamber (21) of the valve insert part (15) having a valve seat (24, 38) and with which a fluid connection through the valve arrangement can be established or shut off, wherein, on the stub (16) of the valve insert part (15) above the seal (18) towards the inner wall (7) of the base part (1), the at least one latching element (26, 29) is integrally formed radially outside the chamber (21), forms an elastically resilient arm (26) and has at least one radially outwardly directed locking rib (29) for engagement with the radially inwardly directed locking projection (8) formed on the inner wall (7), and the actuating element (28) is located on the free ends of the resilient arm (26) for pressing radially inward.

2. The valve arrangement as claimed in claim 1, wherein two latching elements (26, 29) are provided, which are each able to move radially and in a resilient manner by means of a slit (27) that is open toward the free end and that is closed toward the stub (16).

3. The valve arrangement as claimed in claim 1 or 2, wherein the locking rib (29) of the latching element (26, 29) has a sawtooth shape.

4. The valve arrangement as claimed in one of claims 1 through 3, wherein the locking projection (8) of the inner wall (7) forms a closed ring.

5. The valve arrangement as claimed in claim 4, wherein the locking projection (8) delimits an annular circumferential groove (9) with a profile that is sawtooth-shaped in the axial direction and deepens toward the locking projection (8).

6. The valve arrangement as claimed in one of claims 1 through 5, wherein a portion of the stub (16) of the valve insert part (15) tapers conically with a circular cross section, and the inner wall (7) of the base part (1) has a correspondingly conical shape.

7. The valve arrangement as claimed in claim 6, wherein the seal (18) is arranged in the conical portion of the stub (16) and of the inner wall (7).

8. The valve arrangement as claimed in one of claims 1 through 7, wherein a cover cap (40) is designed to engage over the actuating element (28) from radially outside and to cover the valve element (31).

9. The valve arrangement as claimed in claim 8, wherein the cover cap (40) is secured fixedly on the base part (1) via the securing means (11) of the base part (1).

10. The valve arrangement as claimed in one of claims 1 through 9, wherein the actuating element (28) is formed in one piece with the resilient arm (26).

## Revendications

1. Agencement de valve comprenant une partie de base (1), qui comprend des moyens de fixation (11) pour la fixation de l'agencement de valve à un emplacement d'utilisation, ainsi qu'un perçage (6) traversant en direction axiale avec une paroi intérieure (7), une partie formant insert de valve (15), qui peut être mise en place avec une pipe (16) dans le perçage (6) en étant étanchée avec un joint (18) par rapport à la paroi intérieure (6) et qui comprend au moins un élément de verrouillage (29), au moyen duquel la partie formant insert de valve (15) est verrouillable dans la position mise en place et étanchée par franchissement élastique d'une saillie d'enclenchement (8) dans la partie de base (1), et sur lequel se trouve un élément d'actionnement (28) pour libérer et enlever la partie formant insert de valve (15) depuis la partie de base (1), et comprenant un élément de valve réglable (31) qui est monté dans une chambre (21), présentant un siège de valve (24, 38), de la partie formant insert de valve (15) et au moyen duquel une liaison fluidique peut être établie à travers l'agencement de valve ou interrompue, **caractérisé en ce que** ledit au moins un élément de verrouillage (26, 29) est conformé d'une seule pièce sur la pipe (16) de la partie formant insert de valve (15) au-dessus du joint (18) avec la paroi intérieure (7) de la partie de base (1), radialement à l'extérieur de la chambre (21), l'élément de verrouillage formant une branche élastique (26) à effet ressort et au moins une nervure d'enclenchement (29), dirigée radialement vers l'extérieur, pour coopérer avec la saillie d'enclenchement (8) dirigée radialement vers l'intérieur et réalisée sur la paroi intérieure (7), et **en ce que** l'élément d'actionnement (28) se trouve aux extrémités libres de la branche (26) à effet ressort, pour être enfoncé radialement vers l'intérieur.

2. Agencement de valve selon la revendication 1, **caractérisé en ce qu'**il est prévu deux éléments de verrouillage (26, 29), qui sont mobiles radialement avec effet ressort à travers une fente (27) respective ouverte vers l'extrémité libre et fermée en direction de la pipe (16).

3. Agencement de valve selon la revendication 1 2, **caractérisé en ce que** la nervure d'enclenchement (29) de l'élément de verrouillage (26, 29) est réalisée en forme de dents de scie.

4. Agencement de valve selon l'une des revendications 1 à 3, **caractérisé en ce que** la saillie d'enclenchement (8) de la paroi intérieure (7) forme un anneau fermé.

5. Agencement de valve selon la revendication 4, **caractérisé en ce que** la saillie d'enclenchement (8) délimite une gorge périphérique (9) de forme annulaire avec un profil en forme de dents de scie en direction axiale, qui devient plus profond en direction de la saillie d'enclenchement (8).

6. Agencement de valve selon l'une des revendications 1 à 5, **caractérisé en ce qu'**un tronçon de la pipe (16) de la partie formant insert de valve (15) va en se rétrécissant sous forme conique avec une section circulaire, et **en ce que** la paroi intérieure (7) de la partie de base (1) est réalisée sous forme conique correspondante.

7. Agencement de valve selon la revendication 6, **caractérisé en ce que** le joint (18) est agencé dans le tronçon conique de la pipe (16) et de la paroi intérieure (7).

8. Agencement de valve selon l'une des revendications 1 à 7, **caractérisé en ce qu'**un capuchon de couverture (40) est réalisé pour coiffer l'élément d'actionnement (28) radialement de l'extérieur et pour couvrir l'élément de valve (31).

9. Agencement de valve selon la revendication 8, **caractérisé en ce que** le capuchon de couverture (40) est fixé de manière imperdable sur la partie de base (1) avec les moyens de fixation (11) de la partie de base (1).

10. Agencement de valve selon l'une des revendications 1 à 9, **caractérisé en ce que** l'élément d'actionnement (28) est réalisé d'une seule pièce avec la branche (26) à effet ressort.
